# EUROPEAN PATENT APPLICATION

(11) **EP 4 272 858 A2**
(43) Date of publication of application: **08.11.2023**
(21) Application number: 23167915.0
(22) Date of filing: 14.04.2023
(51) Int. Cl.: B01F 23/232, B01F 23/237, B01F 25/312, B01F 25/433, B01F 25/4314, B01F 25/431, B01F 33/502, B01F 23/20, A01M 7/00, B05B 1/26, A01G 25/09

(54) **MACHINE AND SYSTEM FOR SPRAYING OZONATED WATER UNDER HIGH PRESSURE**

(30) Priority: 15.04.2022 IT 202200007652
(71) Applicant: MICHELETTI ENGINEERING & CONSULTING SAGL, 6900 Paradiso Lugano (CH)
(72) Inventor: MICHELETTI, GIORGIO, 6563 Mesocco (CH)
(74) Representative: Autuori & Partners

(57) **Abstract**

A system for spraying ozonated water (OW) comprising means (200) for supplying highpressure water (W), preferably greater than 150 bar, means (300) for supplying gaseous ozone (O) and a machine (10) for producing ozonated water (OW). The machine for producing ozonated water (OW) comprises at least one mixing device (20) with a first inlet (21) fluidically connected with water supply means (W), a second inlet (22) which can be fluidically connected with ozone supply means (O), a first outlet (23) for the ozonated water (OW) and at least one mixing chamber (25) interposed between the first and second inlet (21, 22) and the outlet (23) and fluidically connected therewith. The machine (10) further comprises a mixing pipe (30) which can be fluidically connected with the device (20).

## Description

### Technical field

The present invention generally relates to the field system for spraying ozonated water and it relates to a device for mixing high-pressure ozonated water. Furthermore, the invention relates to a machine for producing ozonated water and a system comprising such machine.

### State of the Art

Systems for producing ozonated water starting from water and from air or water and ozone to obtain ozonated water, that is water containing ozone in solution and dispersed therein, are known. Such systems comprise a mixer having an inlet for water, an inlet for ozone and an outlet ozonated water.

A first drawback of such systems lies in the fact that it has a low operating capacity which limits the fields of application thereof or it forces to use particularly cumbersome equipment such as a carriage for transporting a water tank.

A further drawback of such systems lies in the fact that they are ineffective. In particular, the amount of ozone carried on the surface to be treated is particularly small to a point of making the treatment ineffective.

Furthermore, there are particular applications, such as for example the treatment of rows of leaves, in which there is required a particular efficacy at a given distance from the dispensing of the ozonated water flow, for example at least 3 metres. The known systems are not effective at such distance.

Another example of particular application is the one in which the jet has to penetrate a surface, for example a ground, in which the ozonated water has to penetrate into the ground and it is not effective for at least 10 centimetres therein. The known systems do not allow such application.

### Summary of the invention

An object of the present invention is to at least partly overcome the drawbacks illustrated above by providing a system for spraying ozonated water that is highly functional and cost-effective.

Another object of the invention is to provide a system for spraying ozonated water that is particularly effective.

Another object of the invention is to provide a system for spraying ozonated water with a high concentration of ozone.

Another object of the invention is to provide a system for spraying ozonated water with a high oxidation capacity.

Another object of the invention is to provide a system for spraying ozonated water that has high operating capacity.

Another object of the invention is to provide a system for spraying ozonated water that is small in size.

Another object of the invention is to provide a system for spraying ozonated water that is particularly versatile.

Another object of the invention is to provide a system for spraying ozonated water under high pressure.

Another object of the invention is to provide a system for spraying ozonated water that is effective at a distance of 3 - 5 metres in the air.

A further object of the invention is to provide a machine for producing ozonated water that is highly functional and cost-effective.

Another object is to provide a machine for producing ozonated water wherein the ozone is mixed effectively in water.

A further object of the invention is to provide a water and ozone mixing device that is highly functional and cost-effective.

A further object of the invention is to provide a water and ozone mixing device with high-pressure water.

These and other objects which will be more apparent hereinafter, are attained by a mixing device, a machine for producing and a system for spraying ozonated water as described, illustrated and/or claimed herein.

The dependent claims define advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIG. 1** is a schematic view of a machine **10** for producing ozonated water **OW** comprising a device **20** and a mixing pipe **30;**
FIGS. **2A, 2B** and **3** are an enlarged schematic view of some details of the machine **10** of FIG. 1, with in particular in FIG. 2A a perspective view of the pipe **30** and in FIG. 2B a cross-sectional view of the pipe **30,** and in FIG. 3 a partially cross-sectional view of a device **20;**
**FIGS. 4, 5, 6** and **7** are a schematic view of different embodiments of the machine **10;**
**FIG. 8** is a schematic view of a system **1** for producing ozonated water **OW** comprising a machine **10;**
**FIG. 9** is a schematic view of a particular spray nozzle **401**;
**FIG. 10** is a schematic view of an example of a machine **10** that can be transported.

### Detailed description of some preferred embodiments

With reference to the aforementioned figures, herein described is a system **1** for spraying ozonated water **OW,** which may preferably be used to be sprayed towards a surface of interest, for example a surface to be treated.

Suitably, the system **1** may comprise a machine **10** which may be configured to provide ozonated water **OW.** The system 1 may further comprise means **200** for supplying high-pressure water **W,** means **300** for supplying ozone **O** and possibly spray means **400** for spraying ozonated water **WO.**

The system **1** may be particularly suitable to operate under high pressure, that is with pressure greater than 150 bar, with the advantages better described hereinafter. However, the system **1** and/or the machine **10** and/or the device **20,** may operate with low temperatures too.

The means **300** may comprise an ozone generator **301** of the per se known type and a duct **302** protruding from the former. Preferably, the generator **301** may be of the high concentration type, more preferably, the generator **301** may be configured to produce pure ozone.

On the other hand, the means **200** may comprise at least one duct **201** and a pump **202** acting on the water **A** in the duct **201** so as to pressurise the water **A.**

The pump **202** may be of the high-pressure type. In particular, the pump **202** may have a delivery pressure greater than 150 bar, preferably greater than 250, even more preferably greater than 400 bar. Preferably, the pressure may be in the order of 150 - 800 bar.

The means **300** and the means **200** may supply the machine **10.**

Below is the detailed description of an embodiment of the machine **10** which may preferably but not exclusively be used in the system **1.** As a matter of fact, the machine for producing ozonated water may be used in different systems and it may be connected with any water and ozone supply means and it may be connected with any type of spray means.

Essentially, the machine **10** may comprise a mixing device **20** which may be fluidically connected with the means **200** for supplying water **W** and/or it may be fluidically connected with the means **300** for supplying ozone **O.**

Suitably, the device **20** may be configured to mix ozone **O** and water **W,** that is to carry ozone in the water flow, even when the latter is supplied in the device **20** under high pressure.

Thanks to the configuration of the device **20** described below, the ozone may be carried in the water flow when the latter is under high pressure. This may allow to carry a high amount of ozone and there may be formed a high number of small bubbles (for example 10 times more numerous than the bubbles that are formed with ultra-low-pressure flows, 1-3 bar, like the known ones).

In particular, the device **20** may comprise an inlet **21** for water **W** and at least one inlet **22** for ozone **O.** Preferably, the inlet **21** may be fluidically connected with the means **200,** for example with the duct **201,** while the inlet **22** may be fluidically connected with the means **300,** for example with the duct **302.**

The device **20** may further comprise a mixing chamber **25** which may be fluidically connected with the inlet **21** and the inlet **22** for mixing water **W and** ozone **O** and therefore forming ozonated water **OW.**

The device **20** may further comprise an outlet **23** for ozonated water **OW** which may be fluidically connected with the mixing chamber **25.**

In greater detail, the device **20** may comprise a fluidic connection line extending between the inlet **21** and the outlet **23.** Suitably, such fluidic connection line may comprise the mixing chamber **25** which may therefore remain interposed between the inlet **21** and the outlet **23.**

Preferably, the device **20** may be configured to allow the mixing of water and ozone under high pressure, that is with water flowing in under high pressure.

Suitably, the mixing chamber **25** may comprise one or a plurality of openings **26** for the inlet of water **W,** one or more openings **27** for the inlet of ozone **O** and at least one opening **28** for the outflow of ozonated water **OW.** It is clear that the openings **26** may be fluidically connected with the inlet **21,** the openings **27** may be fluidically connected with the inlet **22** and the opening **28** may be fluidically connected with the outlet **23.**

In particular, the chamber **25** may be configured to reduce the pressure of the flow therein and therefore facilitate the inflow of ozone **O** into the chamber **25.** In other words, the device **20** may exploit the so-called Venturi effect.

In greater detail, the flow of water **W** flowing into the inlet **21** may be under high pressure. In the chamber **25,** the flow may reduce its pressure and increase the speed so as to facilitate the supply of the ozone **O.**

Furthermore, suitably the device **20** may have a longitudinal extension extending along an axis **X.** Preferably, the device **20** may be substantially tubular-shaped.

The mixing of water **W and O** in the chamber **25** may be further facilitated by the positioning of the radial openings **26** with respect to the axis **X.** As a matter of fact, in this manner the flow inside the chamber **25** may be particularly turbulent facilitating the mixing of water **W and O.**

Furthermore, the opening **27** for the ozone **O** may also be radial and it may be at the one of the openings **26.** In this manner, the mixing of water **W** and **O** may be even more facilitated.

According to a particular embodiment, the device **20** may comprise a central body **41,** for example a tubular portion **41,** which may have an internal duct **42** fluidically connected with the inlet **21** and at least one radial opening **26** so as to allow water **W** to flow through from the internal duct **42** to the mixing chamber **25.**

Preferably, the duct **42** may be substantially coaxial to the axis **X,** while the opening or the radial openings **26** may be substantially transversal, preferably perpendicular, to the axis **X.**

Thanks to this characteristic, the spray flowing out from the duct **42** and flowing into the chamber **25** may have a direction substantially transversal, preferably perpendicular, to the axis **X.**

The device **20** may define a main axis **X.** The device **20** may have an end **51** and an opposite end **52** along the axis **X.** Preferably, the inlet **21** and the outlet **23** may respectively be at the ends **51** and **52.**

The device **20** may further comprise a main duct **44** with a portion **45** and a portion **49** having a larger section, for example a larger diameter, and a portion **48** having a smaller section, for example a smaller diameter, interposed between the portions **45** and **49.**

The portion **48** may define the opening **28** substantially coaxial to the axis **X** and fluidically connected with the outlet **23.**

Suitably, the portion **45** may include the mixing chamber **25.**

Preferably, the portion **45** may have a cylindrical area **46** and a converging area **47.** The latter may be interposed between the cylindrical area **46** and the portion **48.**

Advantageously, the central body **41** may remain at the cylindrical area **46.**

In this manner, the flow will expand in the cylindrical area **46** and it will be conveyed through the converging area **47** towards the opening **28** which has a smaller section, for example a smaller diameter should the geometry be cylindrical.

The central body **41** may therefore extend from the end **51** inside the portion **45.**

Suitably, the central body **41** may have a plurality of radial openings **26** fluidically connected with the inlet **21.** Such openings **26** may define the inlet for water **W** into the chamber **25.**

Suitably, the portion **45** may comprise the radial opening **27** fluidically connected with the inlet **22.** Such opening **27** may therefore define the inlet for ozone **O** into the chamber **25.**

The radial aperture **27** may preferably be at the radial openings **26.**

The water **W** may therefore flow out from the small openings **26** and expand into the chamber **25.** Such expansion and the ensuing decrease in pressure may promote the supply of ozone **O.** The high turbulence in the chamber **25** may also allow to carry the ozone **O** into the flow of water **W.**

The flow of ozonated water **OW** may axially flow out from the chamber **25,** preferably coaxially to the axis **X** through the opening **28.**

Preferably, the opening **28** may have a cross-section substantially smaller than the cross-section of the chamber **25.** For example, in case of the cylindrical geometry, the opening **28** may have a diameter smaller than that of the chamber **25.**

Downstream of the opening **28** there may be present a further chamber **29.** In particular, such chamber **29** may have a cross-section substantially larger than the cross-section of the opening **28.** Suitably, the portion **49** may comprise the chamber **29.**

In this manner, the flow of ozonated water **OW** will flow from the larger section **45** to the smaller section **48** and once again to the larger section **49.**

Suitably, the chamber **29** may further facilitate the further mixing of water **W** and ozone **O** in the flow of ozonated water **OW.**

Advantageously, the chamber **29** may have one or more inner threads **29'** so as to promote the rotation of the flow of water and ozone **OW** around the axis **X,** that is it may promote the so-called spin of the flow.

This characteristic may allow to facilitate the mixing of water and ozone further.

The flow may therefore flow out from the device **20** through the opening **23** arranged downstream of the chamber **29.**

The device **20** can be used in the machine **10.** However, it is clear that the device **20** may be used in different machines as devices for supplying ozone in a high-pressure water flow.

Suitably, the machine **10** may comprise the device **20** and a mixing pipe **30** arranged downstream of the device **20** and fluidically connected therewith.

As better explained hereinafter, the pipe **30** may allow to optimise the mixing of the ozone in the ozonated water flow so that the ozone remains trapped therein. In particular, the mixing pipe **30** may be configured to optimise the dispersion of the ozone **O** in the flow of ozonated water **WO,** that is to promote the mixing of the ozone **O** and the water **W** in the flow of ozonated water **OW** flowing out from the device **20.**

Advantageously, the pipe **30** may be preferably sized so that the ozonated water **OW** remains in the pipe **30** for a time interval greater than 10 seconds, preferably comprised between 15 and 30 seconds.

It is clear that such time interval may be as a function of the flow conditions of the ozonated water **OW** in the pipe **30** and/or the length of the pipe **30** in a per se known manner.

Furthermore, such conditions may vary depending on the pressure of the means **200.** In other words, the system **1** may comprise the means **200** and he pipe **30** mutually configured so that the flow of ozonated water **OW** remains inside the pipe **30** for the time interval specified above.

In particular, the mixing pipe **30** may comprise an inlet **31** which can be fluidically connected with the outlet **23.**

Preferably, the inlet **31** may be arranged in proximity of the outlet **23.** Even more preferably, the pipe **30** and the device **20** may be connected directly. For example, the inlet **31** may coincide with the outlet **23.**

Thanks to this characteristic, the machine **10** may be particularly compact. Furthermore, this characteristic may allow to reduce pressure drops the as much as possible. It is clear that there may be provided fittings between the device **20** and the pipe **30** without departing from the scope of protection of the present invention.

Suitably, the pipe **30** may comprise an outlet **33** and a fluidic connection line **32** extending between the inlet **31** and the outlet **33.**

The mixing pipe **30** may comprise at least one portion **34, 36** configured to promote the mixing of the ozonated water **OW** inside the portion.

The pipe **30** may have one or more portions having a substantially spiral development. This may allow to have a very long pipe and at the same time small overall dimensions thereof.

The mixing portion may be a portion **36** of the substantially spiral-shaped pipe **30.** In particular, the axis **Y** of the pipe **30** at the portion **36** may form a spiral around an axis **Z.**

In this manner, advantageously, the flow of the ozonated water **OW** will be particularly mixed.

Preferably, the flow in the spiral **36** may rotate in the anticlockwise direction. This may advantageously allow to facilitate the ionisation of the flow. Such characteristic may promote the adhesion of the ozonated water on the surface to be treated.

Preferably, the axis **Z** may be substantially perpendicular to the axis **X** of the device **20.**

Even more preferably, the spiral portion **36** may define a cylinder so that the portion **36** has a substantially constant curvature. In this manner, the flow of ozonated water **OW** may be mixed and the pressure drops inside the portion **36** may be reduced at the same time.

The mixing portion may be a portion **34** of the pipe **30** which comprises - therein - a surface **35** which includes means **37** for guiding the flow of ozonated water **OW** so that it rotates around its axis **Y** advancing along such portion **34** of the pipe **30.** In other words, the so-called spin of the flow may be formed.

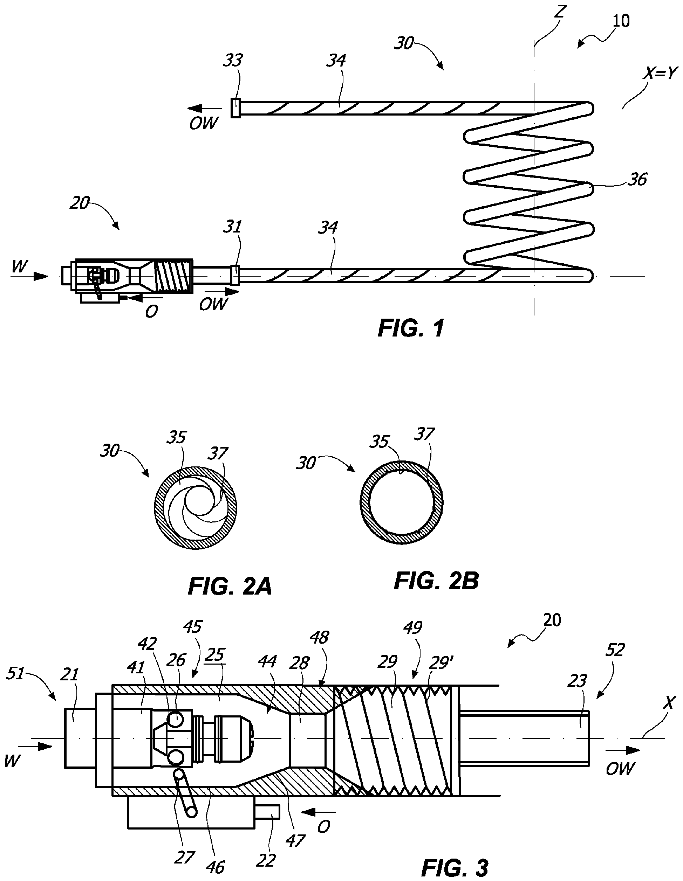

For example, the surface **35** may comprise one or more grooves and/or protuberances **37** which may define means for rotatably guiding the flow of ozonated water **OW.** Such grooves **37** may have a helical extension along the surface **35** for example as schematically shown in FIG. 2A.

Preferably, the means **37** may be grooves on the surface **35** for example as shown in FIG. 2B so that the resistance to the advancement of the flow is minimal and the pressure drops in the pipe **30** are minimal.

Preferably, but not exclusively, the portion **34** may be a straight section of the pipe, that is a portion of the pipe in which the axis **Y** is rectilinear.

Advantageously, in both configurations, the flow of the ozonated water **OW** under high pressure will be subjected to the effect of the centrifuge force promoting the mixing of the water **W** and ozone **O.**

Furthermore, this spin allows the flow to reduce the turbulence thereof and the pressure drops inside the portion **34** of the pipe **30** may be reduced.

Preferably, the portion **34** may have a length greater than 40 cm, preferably greater than 60 cm. For example, the portion **34** may have a length measuring about 80 cm.

Advantageously, the mixing pipe **30** of the machine **10** may comprise one or more of the portions **34** and/or one or more of the portions **36.**

It is clear that should there be present more portions **34** the latter may have a different length.

According to a preferred but not exclusive embodiment of the invention, for example shown in FIG. 1, the mixing pipe **30** may comprise a spiral portion **36** interposed between a pair of portions **34,** which may therefore be upstream and downstream of the portion **36.**

The presence of the pipe **30** allows to effectively mix the ozonated water **OW** under particularly high pressure, particularly inflow pressure values in the device **20** greater than 150 bar, preferably with pressures up to 800 bar.

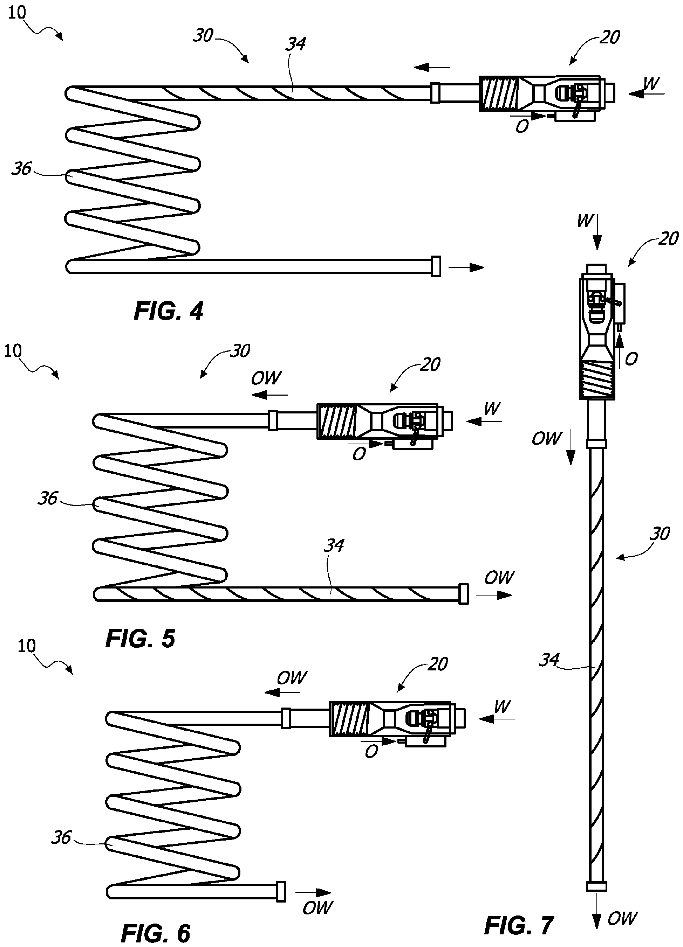

It is clear that the pipe **30** may have different embodiments. For example, the pipe **30** may have a portion **34** and a portion **36.** In particular, the pipe **30** may comprise only one portion **36** and only one portion **34** which may be upstream (FIG. 4) or downstream (FIG. 5) of the portion **36.**

On the other hand, the pipe **30** may comprise only the portion **34,** for example as shown in FIG. 7. In this case, advantageously, the pipe **30** may have substantially longitudinal overall dimensions along the axis **Y** thereof. On the other hand, for example as shown in FIG. 6, the pipe **30** may comprise only the portion **36.** In this case, advantageously, the pipe **30** may have particularly compact overall dimensions.

The portions **34** and/or **36** may be substantially rigid. Preferably, they may be made of stainless steel.

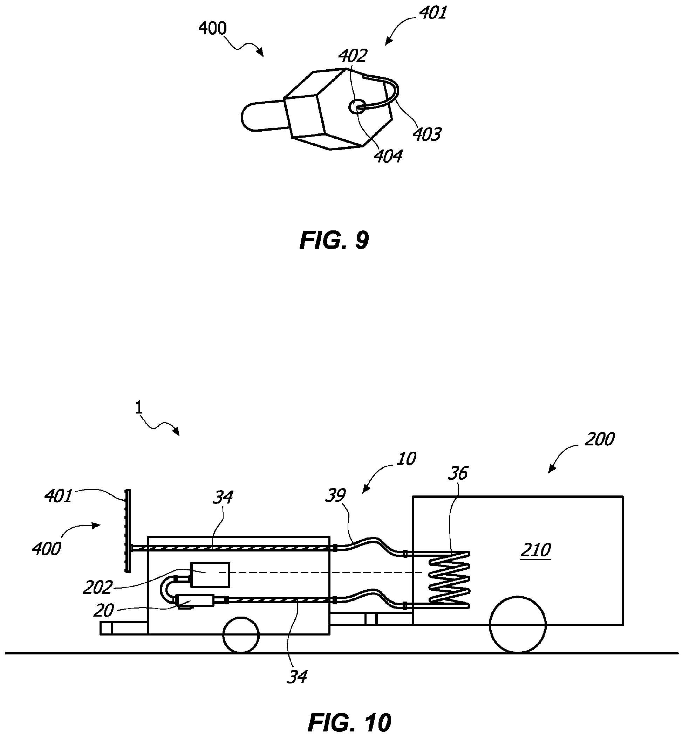

Possibly, as schematically shown in FIG. 10, there may be provided for connection portions **39** interposed between the portions **36** and the portions **34** and/or between two portions **34.**

Advantageously, such connection portions **39** may be flexible. For example, they may be made of Teflon.

Thanks to this characteristic, the mutual movement of two or more components of the machine **10,** for example of the spiral portion **36** with respect to the pump **202,** may be allowed.

The machine **10** described above may allow to produce ozonated water **OW** in a particularly effective manner with the advantages described below.

Thanks to the device **20** which allows to supply under high pressure, there may be obtained a high amount of ozone in the flow of ozonated water **OW.** For example, the generator **301** may provide an amount of ozone greater than 30g/h, preferably greater than 50g/h, more preferably greater than 75g/h. Several ozone generators may possibly be used simultaneously, for example three 24g/h generators.

The above may allow to obtain a high ozone concentration at the outlet, for example at least 2 ppm, preferably at least 3 ppm and more preferably at least 4 ppm. Thanks to the high pressure, such concentrations may be obtained with a low use of water.

For example, the suctioning in the device **20** of about 5 l/min of gas containing ozone may correspond to the introduction of 24 g/h of ozone. Should water **W** flow into the device at 300 bar with a flow rate of 6-10 l/min, there may be suctioned about 15 l/min of gas with ozone. Such high suctioning capacity in the device **20** may correspond to about 72 g/h of ozone, which is a very high amount.

Therefore, there may be obtained high concentrations of ozone and use of low amounts of water.

Furthermore, the pipe **30** may allow to mix the ozone in the flow of ozonated water **OW** so that the ozone **O** remains contained in the flow avoiding dispersion once in the environment thus conferring effectiveness to the flow of ozonated water **OW.**

The flow of ozonated water **OW** produced by the machine **10,** that is flowing out from the outlet **33,** may therefore have a concentration and a particularly high effectiveness.

Preferably, the concentration of ozone flowing out may be greater than 2 ppm, preferably 3 ppm, preferably greater than 4 ppm. Such concentration is much higher than the one normally used in known systems which have particularly low concentrations in the order of 1 ppm.

The amount of ozone carried on the surface to be treated may be greater considering the same water flow rate. Possibly, the high concentration may allow a greater advancement speed and/or a reduction of the water required to carry the same amounts of ozone.

Furthermore, thanks to the machine **10,** the ozonated water **OW** flowing out therefrom may be mixed more effectively. Thanks to the effective mixing, the ozone will not be dispersed into the environment as soon as it flows out from the machine **10,** but it may maintain a high concentration even at a distance from the latter.

In particular, the outflow concentration may be substantially equal to the concentration at a predetermined distance from the outlet, for example at a distance of 3-5 metres in air or at a distance of 10 cm penetrating into the ground.

Advantageously, thanks to the machine **10** with the device **20** and the pipe **30,** water **W** and ozone **O** may be mixed under high pressure.

In this case, also the flow of ozonated water **OW** flowing out from the machine **10** may have a high pressure. As a matter of fact, even in the event of high pressure drops, for example in the order of 50%, the pressure of the ozonated water **OW** flowing out may be equally high.

Thanks to this characteristic, as better explained hereinafter, there may be connected a plurality of nozzles or there may be used a small number of nozzles which will have a high pressure jet.

Suitably, the flow rate of water **W** required to dispense the same amount of ozone **O** will decrease as the pressure of the flow of ozonated water **OW** increases.

Thanks to the use of ozonated water **OW** under high pressure, the amount of water to dispense a determined amount of ozone **O** may be lesser than the amount of water required to carry the same amount of ozone **O** with ozonated water under low pressure. Advantageously, this may allow saving in terms of costs.

Furthermore, thanks to the low water flow rates, smaller than 60 l/min, there may be provided a system **1** with a high operating capacity and/or particularly small overall dimensions. In particular, the system **1** may have a significantly greater operating capacity than those of the prior art which require a water flow rate of about 60 l/min.

Generally, the machine **10** is used in movable systems 1 and the water is stored in a tank. The low flow rate may therefore confer a greater operating capacity to the system **1** and/or a decrease in the overall dimensions.

Furthermore, advantageously, the machine **10** or the device **20** may be supplied with pressurised water **W,** for example by means of a pump **202.** This may advantageously allow to pressurise only one liquid, that is water **W.**

As a matter of fact, advantageously, this may allow to avoid having to pressurise a fluid containing liquid and gas, for example water and ozone which - as known - require particular solutions so as not to damage the pump, avoid explosions and so as not to promote the migration of the ozone from the water.

The pump **202** may therefore be a high-pressure pump of the per se known type.

In the light of the above, the machine **10** may therefore be particularly safe.

Furthermore, advantageously, the machine **10** may be used with different pumps **202,** that is with different pressures. Preferably, such pressures may always be high pressures, that is greater than 150 bar.

Thanks to this characteristic, the machine **10** may be particularly versatile and the same machine **10** may be used in different systems **1.**

According to a particular aspect of the invention, the machine **10** may comprise a plurality of mixing devices **20.** Preferably, such devices **20** may be connected to the means **200.** For example, the inlet **21** may be suitable to be fluidically connected with the means **200.** In this case, the devices **20** may operate substantially parallel.

Suitably, the machine **10** may further comprise a corresponding plurality of pipes **30** which may be connected with a respective device **20.** The pipes **30** may have a respective outlet **33** and a respective inlet **31** which may be connected with the outlet **23** of the respective device **20.**

Valve means of the known type may possibly be present to selectively place the means **200** in communication with one or more of the devices **20.**

In this manner, the machine **10** may be particularly versatile.

Possibly, there may be provided for devices **20** connected to each other in series so that the mixing of ozone and the amount of ozone supplied in the flow, and therefore the concentration thereof, may be particularly high.

Now, described below are some preferred ranges of some geometric and/or hydraulic parameters of the system **1.** It is clear that the inflow pressure may vary depending on the number pf nozzles installed and vice versa in a per se known manner.

The pressure of the water **W** flowing into the device **20** may be greater than 150 bar, preferably greater than 250 bar and more preferably comprised between 300 and 800 bar. Advantageously, such pressure is much higher than the one normally used in the prior art which is in the order of 2-3 bar.

The water flow rate **W** flowing into the device **20** may be preferably comprised between 5 and 25 l/min.

The pipe **30** may have a length greater than 10 metres, preferably comprised between 15 and 40 metres even more preferably of about 15 metres.

The pipe **30** may have different diameters. Preferably, the inner diameter may be about 10 - 20 mm.

The flow rate of ozonated water **OW** in the pipe **30** may preferably be comprised between 5 and 25 l/min.

The flow speed of ozonated water **OW** in the pipe **30** may preferably be comprised between 0.8 and 2.5 m/s.

Therefore, essentially, the machine **10** may comprise the device **20** and the device **30.** The system **1** may comprise the machine **10,** the water and ozone supply means and possibly the spray means **400** for carrying the ozonated water **OW.**

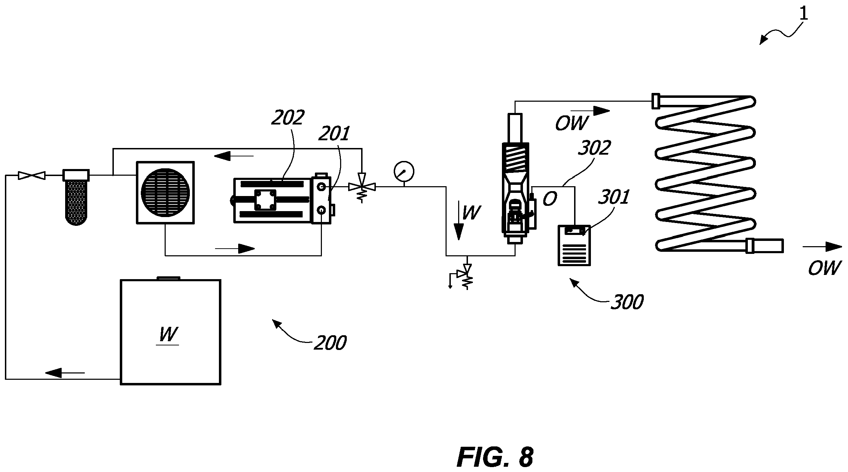

FIG. 8 shows a system **1** which comprises an embodiment of the machine **10** and the means **300** with the generator **301** for ozone **O** and the means **200** with the pump **202** fluidically connected with the machine **10.**

The outlet of the machine **10,** for example the outlet **33** of the pipe **30**, may be fluidically connected with means **400** for spraying ozonated water **OW.** Such spray means may vary depending on the intended use of the system **1.**

According to an embodiment, the system **1** may be particularly suitable to treat plant leaves.

For example, the system **1** may comprise the means **200** configured so that the water **W** at the inlet of the machine **10,** for example the inlet **21** of the device **20,** may have a pressure of about 250 bar. For example, the system **1** may comprise a pump **202** configured to introduce water into the duct **201** with such pressure.

The system **1** may further comprise the spray means **400** which may comprise a manifold for a plurality of nozzles **401** all fluidically connected with the outlet of the machine **10,** for example the outlet **33** of the pipe **30.** For example, there may be provided for about 10-15 nozzles.

Such nozzles **401** may be configured to form a diffused spray. The manifold may define an axis which may be substantially perpendicular to the ground. In this manner, advancing between the rows ozonated water may be sprayed laterally along the entire height of the plants.

Thanks to the high pressure flowing into the device **20** and to the configuration of the machine **10** which allows to carry the ozone in the flow and retain it therein, the spray flowing out from the nozzles may have a pressure of about 15-20 bar and an effective range up to 5 metres, that is wherein the ozone is carried inside the flow. In particular, the ozone concentration may be about 3-4 ppm.

Such configuration of the system **1** may be particularly suitable for use in the treatment of leaves of rows of plants, such as orchards and vineyards. Such leaves may therefore define the surface of interest.

According to a particular aspect of the invention, the nozzles **401** may comprise an outlet **402** for the spray of pressurised ozonated water **OW** and a jet breaker element **403** having a pointed tip **404** arranged at the outlet **402** and spaced therefrom to intercept the spray flowing out from the outlet.

In this manner, the outflowing spray may be broken upon flowing out so that it is dispersed. Thanks to this characteristic, the spray may spread on the leaves allowing an effective distribution of the ozone thereonto.

In particular, thanks to the presence of the jet breaker **403**, the nozzle **401** may not be of the atomiser normally used in such applications. In greater detail, such known atomiser nozzles require mixing in the vicinity of the of the outlet of the flow of ozonated water **OW** with air for atomising the spray and therefore, basically, they reduce the concentration of ozone. Furthermore, such nozzles significantly reduce the range of the outflowing spray.

For example, the systems of the prior art with a pressure of 2-3 bar with such atomiser nozzles have a treatment effectiveness lower than 0.5 metres, generally of 0.3 metres.

Advantageously, the use of the jet breaker **403** may allow to break the spray without adding air to the latter therefore maintaining the ozone concentration high. The latter may be greater than 3 ppm, preferably about 4 ppm. Furthermore, the use of relatively high pressures at the outlet of the spray (15-20 bar) and of the jet breaker element may allow a high effectiveness at a range between 2 and 5 metres, particularly suitable to treat the leaves of rows of plants.

According to a different embodiment, the system **1** may be particularly suitable to treat the ground.

For example, the system **1** may comprise the means **200** configured so that the water **W** at the inlet of the machine **10,** for example the inlet **21** of the device **20,** may have a pressure of about 400 bar. The flow rate at the inflow may be about 10-20 l/min.

To this end, the spray means **400** may therefore comprise a plurality of nozzles **401,** for example three nozzles, which may be fluidically connected with the outlet **33** of the pipe **30.**

Thanks to the high pressure flowing into the device **20,** the spray flowing out from the nozzles may have a pressure of about 100 bar. Thanks to this characteristic, the spray of ozonated water may effectively penetrate into the ground, preferably for about 10 cm into the soft ground typically in proximity of the rows of vines.

In this case, the nozzles **401** may be configured to form a concentrated spray.

A support device designed to be moved on the ground for a plurality of such nozzles all fluidically connected with the outlet **33** of the pipe **30,** may preferably be provided for.

For example, the support device may be obtained according to patent EP3316683.

According to a different embodiment, the system **1** may be particularly suitable to treat the leaves of vegetables.

For example, the system **1** may comprise the means **200** configured so that the water **W** at the inlet of the machine **10,** for example the inlet **21** of the device **20,** may have a pressure of about 150 bar. The inflowing flow rate may be about 10-20 l/min.

The system 1 may further comprise the spray means **400** which may comprise a manifold for a plurality of nozzles **401** all fluidically connected with the outlet of the machine **10,** for example the outlet **33** of the pipe **30.** For example, there may be provided for about 10-40 nozzles.

Such nozzles **401** may be configured to form a diffused spray. The manifold may define an axis which may be - in use - substantially parallel to the ground. In this manner, advancing in the field ozonated water may be sprayed over the entire width of the manifold.

Preferably, the nozzles **401** may be parallel to the plane defined by the field with the vegetables or slightly inclined (about 5°, possibly up to 10°) with respect to such plane towards the field. In this manner, advancing on the field, there may be obtained a high treatment effectiveness.

Thanks to the high pressure flowing into the device **20** and to the configuration of the machine 10 which allows to carry the ozone in the flow and retain it therein, the spray flowing out from the nozzles may have a pressure of about 15-20 bar and an effective range amounting to about 10- 50 cm, preferably about 30 cm. In particular, the ozone concentration on the vegetables at such distance may be about 2-4 ppm.

According to a particular aspect of the invention, the same machine **10** may be connected with different spray means **400** for different purposes. In other words, modifying or replacing the spray means **400,** for example by changing the number of nozzles, or by replacing the manifold, or the type of nozzles, the machine **10** may be used in different systems **1,** such as for example the ones described above.

Given that the tanks, the pumps and the drive means are the most expensive and cumbersome part of the system **1,** it is clear that thanks to this characteristic the system **1** and the machine **10** are particularly versatile and cost-effective. Furthermore, the adjustment of the power of the motor and/or of the pump may be obtained in a simple manner and known manner.

Suitably, the system **1** may comprise a support structure for supporting the machine **10** and/or the means **200** and/or **300** and means for causing the movement thereof of the support structure along an advancement direction, for example along a row of plants, along the field or along the vineyard.

For example, a tractor with a carriage for supporting the means **200,** the means **300,** the machine **10,** for example the device **20** and/or the pipe **30,** may be provided for. In particular, the support carriage may support the tank **210** of the water **W,** the ultra-high-pressure pump **202,** means for supplying the latter, the ozone generator **301,** the machine **10** with the device **20** and the pipe **30** and possibly the spray means **400.** For example, the spray means **400** may include a manifold, for example a connecting bar, with a plurality of nozzles **401.**

Advantageously, the presence of fittings or flexible pipe connection portions, for example the portions **39,** may allow to move the tractor and the support carriage or to move different components of the carriage.

According to a particular aspect of the invention, the pipe **30** or a part thereof may be inside the tank **210.** For example, as schematically shown in FIG. 10, the coil **36** may remain inside the tank **210.**

This may allow to reduce the overall dimensions.

Furthermore, thanks to this characteristic, advantageously, the coil **36** may be cooled by the water contained in the tank. This characteristic may allow to avoid the deterioration of the ozone in the pipe **30.**

Irrespective of the configurations outlined above, there may be provided for means for selectively interrupting the supply of ozone when the water flow rate inside the device **20** is below a predetermined threshold value.

In other words, it may be avoided that when the water flow rate reduces or there is none, for example when the tank is empty, the device **20** and the pipe **30** are filled with ozone.

Thanks to this characteristic, the machine **10** and generally the system **1** may be particularly safe.

The invention is susceptible to numerous modifications and variants, all falling within the scope of protection of the attached claims. All details can be replaced by other technically equivalent elements, and the materials can be different depending on the needs, without departing from the scope of protection of the invention defined by the attached claims.

## Claims

1. A mixing device which can be fluidically connected with means (**200**) for supplying high-pressure water (**W**), ozone supply means (**O**) means (**400**) for spraying ozonated water (**OW**) comprising:
- a first inlet (**21**) which can be fluidically connected with water supply means (**W**),
- at least one second inlet (**22**) which can be fluidically connected con ozone supply means (**O**),
- a first outlet (**23**) for ozonated L water (**OW**);
- at least one mixing chamber (**25**) interposed between said first and second inlet (**21**, **22**) and said outlet (**23**) and fluidically connected therewith.

2. Device according to the preceding claim defining a main axis (**X**) and having a first end (**51**) and a second opposite end (**52**) along said axis (**X**), said first inlet (**21**) and said first outlet (**23**) being at said first and second end (**51 52**), the device comprising a main duct (**44**) with a first and second portion (**45 49**) having a larger diameter and a third portion (**48**) having a smaller diameter interposed between said first and second portion (**45 49**), said first portion (**45**) including said mixing chamber (**25**).

3. Device according to the preceding claim, comprising a central body (**41**) extending from said first end (**51**) inside said first portion (**45**), said third portion (**48**) having a first opening (**28**) substantially coaxial to said axis (**X**) fluidically connected with said first outlet (**23**), said central body (**41**) having a plurality of second radial openings (**26**) fluidically connected with said first inlet (**21**).

4. Device according to the preceding claim, wherein said first portion (**45**) comprises a third radial opening (**27**) fluidically connected with said at least one second inlet (**22**), said third radial opening (**27**) being at said second openings (**26**) of said central body (**41**).

5. Device according to claim 2, 3 or 4, wherein said first portion (**45**) has a cylindrical area (**46**) and a converging area (**47**), the latter being interposed between the cylindrical area (**46**) and the third portion (**48**), said central body (**41**) being designed to remain at said cylindrical area (**46**).

6. A machine for producing ozonated water (**OW**) which can be connected with means (**200**) for supplying high-pressure water (**W**) and means (**300**) for supplying ozone (**O**) comprising:
- at least one mixing device (**20**) according to any one of the preceding claims;
- a mixing pipe (**30**) comprising a third inlet (**31**) which can be fluidically connected with said first outlet (**23**) and a second outlet (**33**).

7. Machine according to claim 6, wherein said mixing pipe (**30**) has a length greater than 10 metres, preferably comprised between 15 and 30 metres.

8. Machine according to claim 6 or 7, wherein said mixing pipe (**30**) comprises at least one first section (**36**) having a spiral extension.

9. Machine according to claim 6, 7 or 8, wherein said mixing pipe (**30**) comprises at least one second section (**34**) which includes an inner surface (**35**) having one or more guides (**37**) having a helical development.

10. Machine according to any one of the preceding claims, comprising at least one first and second mixing device (**20**) each having said first inlet (**21**) which can be fluidically connected with the water supply means (**W**), the machine further comprising at least one first and second mixing pipe (**30**) each having a second outlet (**33**) and said third inlet (**31**) fluidically connected with said first outlet (**23**) of said at least one first and second mixing device (**20**).

11. A system for spraying ozonated water (**OW**) comprising:
- means (**200**) for supplying high-pressure water (**W**);
- means (**300**) for supplying gaseous ozone (**O**);
- a machine (**10**) according to any one of the preceding claims;
wherein said water supply means (**200**) comprising at least one high-pressure pump (**202**) fluidically connected with said inlet (**21**) so that the water (**W**) flows into said first inlet (**21**) with a pressure greater than 150 bar.

12. System according to the preceding claim wherein said mixing pipe (**30**) of said machine (**10**) has a length such that the ozonated water (**OW**) remains therein for a time interval greater than 10 seconds.

13. System according to claim 11 or 12 comprising spraying means (**400**) fluidically connected with said second outlet (**33**) of said mixing pipe (**30**), said spray means (**400**) comprising a plurality of spray nozzles (**401**), said plurality of nozzles (**401**) comprising a third outlet **(402)** for pressurised ozonated water (**OW**) and a jet breaker element (**403**) having a pointed tip (**404**) facing said third outlet (**402**) to intercept the spray flowing out from said third outlet (**402**) to break it.

14. System according to claim 11 or 12, comprising spray means (**400**) fluidically connected with said second outlet (**33**) of said mixing pipe (**30**), said spray means (**400**) comprising a plurality of spray nozzles (**401**), said plurality of nozzles (**401**) being configured to promote a concentrated jet, the number of said plurality of nozzles (**401**) being such that the spray flowing out from the latter has a pressure greater than 100 bar.

15. System according to any one of claims 11 to 14, further comprising a support structure for said water supply means (**200**), said ozone supply means (**300**) and said machine (**10**), said water supply means (**200**) comprising a storage tank (**210**), the system further comprising means for causing the advancement of said support structure along an advancement direction.
